# EUROPÄISCHE PATENTSCHRIFT

(11) **EP 3 730 010 B1**
(45) Veröffentlichungstag und Bekanntmachung des Hinweises auf die Patenterteilung: **15.06.2022**
(21) Anmeldenummer: 20165244.3
(22) Anmeldetag: 24.03.2020
(51) Int. Cl.: A47J 36/06, A47J 37/10

(54) **DECKEL, INSBESONDERE GLASDECKEL FÜR TÖPFE ODER PFANNEN**
LID, PARTICULARLY GLASS LID FOR POTS OR PANS
COUVERCLE, EN PARTICULIER COUVERCLE EN VERRE POUR POTS OU CASSEROLES

(30) Priorität: 25.04.2019 DE 202019102320 U
(43) Veröffentlichungstag der Anmeldung: 28.10.2020
(73) Patentinhaber: Warimex Waren-Import Export Handels-GmbH, 77743 Neuried (DE)
(72) Erfinder: Schmiederer, Tobias, 77743 Neuried (DE)
(74) Vertreter: Patentanwälte Vomberg & Schart

(56) Entgegenhaltungen:
- DE-A1- 19 534 113
- DE-A1-102010 062 854
- FR-A1- 2 598 606
- KR-B1- 100 951 387
- KR-B1- 101 430 046
- US-A- 1 942 900
- US-A1- 2004 069 154

## Beschreibung

Die Erfindung betrifft einen Deckel für Töpfe oder Pfannen mit einer Handhabe, insbesondere mehrstufig ausgebildeter Deckel für Töpfe oder Pfannen mit unterschiedlichem Durchmesser, mit einem in der Dampfauslassöffnung integrierten Geruchsfilter, der aus Aktivkohle besteht oder diese enthält. Ein solcher Deckel wird in der US 2004/0069154 A1 beschrieben.

Topf- oder Pfannendeckel erfüllen verschiedene Aufgaben: Zum einen dienen Deckel, insbesondere bei Pfannen als Spritzschutz, um das Austreten von Fett oder anderen Flüssigkeiten zu verhindern, zum anderen dienen sie dazu, das Entweichen von entstehendem Dampf zu blockieren, was einerseits den Garprozess fördert und zudem verhindert, dass die zum Garen erforderliche notwendige Flüssigkeit vollständig verdampft. Bei hohen Temperaturen in der Nähe und insbesondere oberhalb des Siedepunktes vorhandener Flüssigkeiten kann jedoch die Dampfbildung unterhalb des Deckels so groß werden, dass der Dampfdruck den Deckel abhebt, wonach ebenfalls die Gefahr besteht, dass bereits an der Deckelunterseite kondensierte Flüssigkeit ausströmt. Um diesen unerwünschten Effekt zu verhindern, weisen Deckel häufig ein Ventil auf, das sich bei zu hohem Dampfdruck öffnet und den Dampf ausströmen lässt. Von sogenannten Schnellkochtöpfen abgesehen, bei denen der Deckel dampfdicht am Topf befestigt wird und bewusst ein Dampfüberdruck erzeugt werden soll, um den Koch- und Garprozess zu beschleunigen, haben sich Glasdeckel durchgesetzt, die den Vorteil haben, dass die Speisen beim Garen beobachtet werden können.

Unangenehm sind jedoch je nach Speise intensive Geruchsbildungen, die sich zumeist nicht nur in der Küche, sondern auch in den angrenzenden Räumen und Fluren verteilen und ein starkes Lüften während des Kochprozesses erfordern. In modernen Küchen vorhandene Dampfabzugshauben sind nur bedingt hilfreich, da sie lediglich einen geringen Teil der entstehenden Dämpfe absaugen können. Eine Erhöhung der Absaugleistung hat den Nachteil, dass hierdurch unerwünschte Zugluft-Bewegungen entstehen.

Die DE 10 2010 062 854 A1 beschreibt eine Abdeckung für Bratpfannen, Töpfe oder Bräter, in die ein Filterelement aus Aktivkohle zur Geruchsreduktion integriert ist.

Die US 1,942,900 A betrifft ein Kochgefäß und einen Deckel, die über jeweilige Flansche gasdicht miteinander verbunden sind. Der Deckel besitzt einen zentralen Aufsatz mit einer oberen Abdeckung, in der ein Dampfauslassventil vorgesehen ist. Der zentrale Aufsatz hat eine Kammer, in der sich ein Schwamm aus Kupferwolle oder eine Anordnung von mehreren perforierten Scheiben aus einem deodorierenden Material befindet, die übereinander in einzelnen Etagen angeordnet sind. Die Kammer besitzt zudem einen ringförmigen Boden, in dessen Mitte ein sich weiter nach unten erstreckendes Auffanggefäß als Kondensationskammer vorgesehen ist. Dieses Auffanggefäß besitzt einzelne Öffnungen, durch die entstehende Dämpfe des Kochgutes nach oben entweichen können. Der ringförmige Boden der Kammer ist als Ringnut zur Aufnahme einer Flüssigkeit wie z.B. Weinessig ausgebildet. Abgesehen von dem großvolumigen Aufbau und dem hohen Gewicht besitzt der Deckelaufsatz den Nachteil, dass das Funktionsprinzip im Wesentlichen darauf beruht, dass die geruchsbelasteten Dämpfe kondensieren, wobei der Hauptteil der Dämpfe allerdings ungefiltert über das Ventil ausströmt. Zudem ist der Deckel vielteilig und damit teuer in der Herstellung sowie nur mit großem Aufwand zu reinigen.

Die US 2004/0069154 A1 zeigt einen Universaldeckel für Töpfe und Pfannen mit unterschiedlichem Durchmesser. Dieser Deckel besitzt an seiner Unterseite mehrere abgestufte Bereiche.

Es ist daher Aufgabe der vorliegenden Erfindung, einen Topfdeckel zu schaffen, der die genannten Nachteile beseitigt und somit für ein verbessertes Raumklima beim Kochen führt.

Diese Aufgabe wird durch den Deckel nach Anspruch 1 gelöst. Der erfindungsgemäße Deckel besitzt eine integrierte Dampfauslassöffnung mit einem Geruchsfilter und einem Duftstoffspender mit einem Duftstoff, der ausströmende Gase mit Düften versetzt. Diese Dampfauslassöffnung verhindert zum einen, dass bei einem entstehenden Dampfüberdruck der Deckel vom Topf oder von der Pfanne abheben kann. Der vorhandene Geruchsfilter, der im Prinzip zum Beispiel bei Staubsaugern oder bei Dampfabzugshauben bekannt ist, absorbiert unerwünschte Gerüche. Zudem ist in der Dampfauslassöffnung in einem Duftstoffspender ein Duftstoff angeordnet, so dass die ausströmenden Gase mit den als angenehm empfundenen Düften versetzt werden. Solche Duftstoffe sind z.B. aus Pflanzenextraktionen zu gewinnen und werden beispielsweise in Parfum oder in mit Gras gefüllten Duftsäckchen oder getränkten Vliesstoffen verwendet. Im vorliegenden Fall werden solche Duftstoffe wie Zitrone, Apfelsine oder Gewürzstoffe verwendet, die als angenehme Kochdüfte empfunden werden. Als Duftspender können auch zerkleinerte Frucht- oder Gewürzrohstoffe dienen.

Als Geruchsfilter bietet sich Aktivkohle an, die beispielsweise in einem Vlies, in einem Schaum oder als Schüttung in einem Gehäuse, vorzugsweise in einer austauschbaren Kapsel angeordnet sein kann. Das Vlies oder der Schaum dient hierbei zur Fixierung der pulver- oder granulatförmigen Aktivkohle und dient lediglich als Füllstoff. Vlies kann jedoch auch gleichzeitig als Trägerstoff für flüssige Duftstoffe dienen, in denen das Vlies mit einer entsprechenden Duftstoff-Flüssigkeit getränkt wird.

Duftstoffe werden, wie im Prinzip nach dem Stand der Technik bekannt, vorzugsweise in einem Trägerstoff gebunden, was durch Adsorption oder Absorption oder durch Tränkung eines porösen oder saugfähigen Trägers wie Vlies oder Filz geschehen kann. Der Geruchsfilter sowie der Duftstoffspender können entweder in einem gemeinsamen Körper als kompakte Einheit angeordnet sein oder in separaten Körpern enthalten sein, die insgesamt eine Einheit als Geruchsfilter und Duftstoffspender bilden. Sowohl Duftstoffspender als auch Aktivkohlefilter (Geruchsfilter) verlieren mit der Zeit ihre Wirkung. Sofern die entsprechende "Lebensdauer" der Aktivkohlefilter sowie der Duftstoffspender etwa gleich lang ist, bietet es sich an, beide Stoffe in einer kompakten Einheit anzuordnen. Dies kann zum Beispiel eine Granulat- und/oder Pulver-Schüttung beider Komponenten in Form einer Mischung sein, die in einem Gehäuse mit engmaschigen Wänden angeordnet wird. Zum Wechsel wird ein solches Gehäuse entweder komplett ausgetauscht oder über eine abschraubbare Deckelöffnung durch Ausschütten entleert. Es ist jedoch auch möglich, die Duftstoff- und/oder Aktivkohle in Form von Pulver, Granulat, Chips oder Perlen in einer Kunststoffkapsel oder einem Papier- oder Stoffgewebebeutel separat oder gemeinsam anzuordnen. Die Kapsel oder der Beutel bzw. bei separater Anordnung die Kapseln oder die Beutel werden entnommen und entsorgt, sobald die Wirkstoffe (Aktivkohle, Duftstoffe) ihre Funktion nicht mehr erfüllen können. Hiernach werden neue Kapseln oder Beutel eingesetzt. Die Verwendung von Duftstoffbehältern hat den Vorteil, dass der Benutzer auch selbst gewählte, ggf. zerkleinerte Früchte- oder Gewürzstücke wie z.B. Zitronenschalen oder Minze selbst zusammenstellen kann.

Um zu vermeiden, dass für jeden Topf- oder Pfannendurchmesser ein passender Deckel verwendet werden muss, was einen entsprechenden Stauraum in Küchenschränken erfordert, ist nach einer Weiterbildung der Erfindung vorgesehen, dass der Deckel an der Unterseite seiner Peripherie ringförmige Abstufungen oder auf der Peripherie beabstandete Halterippen aufweist, wodurch ein Universaldeckel entsteht, der je nach Anzahl der Stufen für mehrere Topfdurchmesser verwendbar ist. Solche Abstufungen oder Abstandshalter sind vorzugsweise in einem Silikon-Ringkörper enthalten, der sich um den mittleren, insbesondere aus Glas bestehenden Deckel erstreckt. Die Stufe mit dem von der Deckelmitte gemessenen Radius wird für den durchmesserkleinsten Topf oder die durchmesserkleinste Pfanne benutzt; in diesem Fall überragt der äußere Teil des Silikonrings den äußeren Topfoder Pfannenrand mit seinen radial weiter außen liegenden Stufen. Die radial äußerste Stufe bildet den größtmöglichen verwendbaren Deckeldurchmesser. Auf diese Weise können "Universaldeckel" geschaffen werden, die für bis zu sieben Topf- oder Pfannendurchmessergrößen geeignet sind.

Ein Ausführungsbeispiels ist in den Zeichnungen dargestellt und wird im Folgenden erläutert. Es zeigen:
- Fig. 1a: eine perspektivische Ansicht des erfindungsgemäßen Deckels auf die Deckelunterseite,
- Fig. 1b: eine Teilquerschnittsansicht entlang der Linie A-A in Fig. 1a
- Fig. 2a: eine perspektivische Ansicht auf die Oberseite eines weiteren Deckels,
- Fig. 2b: eine Schnittansicht entlang der Linie B-B in Fig. 2b

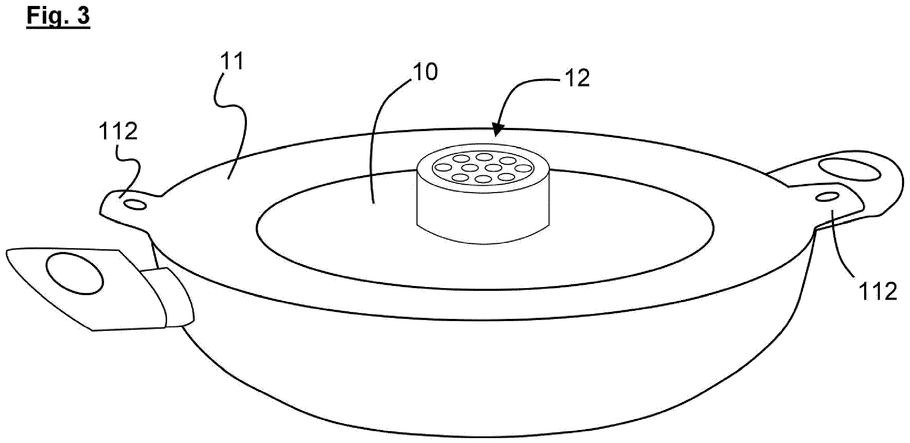

- Fig. 3: eine perspektivische Ansicht auf die Deckeloberseite eines auf eine Pfanne aufgesetzten Deckels nach Fig. 1a und
- Fig. 4: eine Detailansicht der Dampfauslassöffnung mit dem Aufnahmegehäuse für den Geruchsfilter und den Duftspender.

Der erfindungsgemäße Deckel besitzt ein vorzugsweise aus Glas bestehendes, lichtdurchlässiges Innenteil 10 und ein aus Silikon bestehendes ringförmiges Außenteil, das entweder aus einer nicht dargestellten treppenförmigen Abstufung oder vier äquidistant angeordneten Rippentrippeln 111 besteht, die jeweils zur Abstützung auf dem Pfannenrand einer Pfanne mit einem 24 cm, 26 cm und 28 cm großen Durchmesser geeignet ist. Je nach Pfannengröße ragt der Deckel somit über den Pfannenrand bei Pfannen kleineren Durchmessers hinaus. Der Deckel besitzt ferner zwei Ausstülpungen 112, die als jeweilige Griffe nutzbar sind.

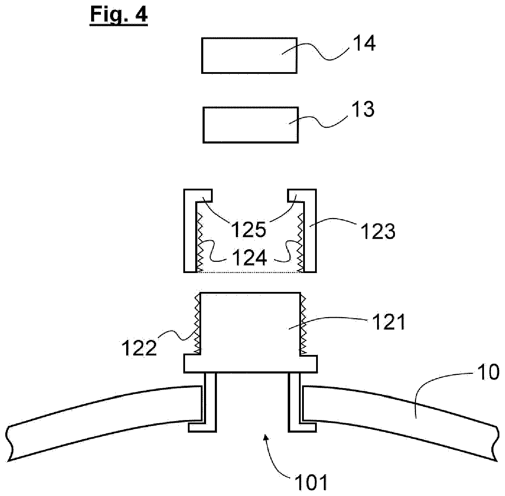

Wie Fig. 4 zu entnehmen ist, ist in der Mitte des Deckels ein Gehäuse 12 angeordnet, das aus einem hülsenförmigen, die Deckeldurchbrechung 101 durchgreifenden Innenrohr 121 mit einem Außengewinde 122 und aus einem hülsenförmigen Aufsatz 123 mit einem Innengewinde 124 besteht. Die Gewinde 122 und 124 bilden eine Schraubverbindung zur Fixierung des Aufsatzes 123 an dem Innenrohr 121. Der Aufsatz 123 besitzt einen einwärts gerichteten Kragen 125. Unterhalb dieses Kragens können zwei Kapseln 13 und 14 fixiert werden, von denen die Kapsel 13 ein Aktivkohlegranulat und die Kapsel 14 einen Duftstoffspender in einer strohartigen Form besitzt. Im vorliegenden Fall sind beide Einheiten (Kapseln 13 und 14) getrennt in Luftausströmrichtung hintereinander angeordnet, so dass entweichende Gase sowohl den Aktivkohlefilter als auch den Duftspender durchlaufen. Aktivkohle bindet weitestgehend Koch- oder Bratgerüche, wohingegen die Kapsel 14 als Duftspender dient und die ausströmende Luft anreichert. Die Düfte können entweder aus Zitrusfrüchten wie Zitronen oder Apfelsinen extrahiert sein oder als Kräuterdüfte (Basilikum, Majoran, Oregano, Minze) bestehen. In Kapseln kann der Benutzer auch beliebige Stoffe wie z.B. zerkleinerte Zitronenschalen oder Mischungen von Gewürzstoffen einfüllen.

Anstelle der Kapseln 13 und 14 können auch kleine Beutel oder Säckchen mit entsprechenden Füllungen verwendet werden, wie dies bei Teebeuteln bekannt ist. Solche teebeutelartigen Behälter haben den Vorteil, dass sie biokompatibel entsorgt werden können, nämlich dann, wenn die Filter- und Duftspendewirkung nachlässt. Duftspender können auch als Flüssigtränkungen in Vlies oder anderen Stoffen gespeichert werden.

Im Rahmen der vorliegenden Erfindung können die Filterstoffe (z.B. aus Aktivkohle) und die Duftstoffe (z.B. aus zerkleinerten Zitrusfrüchten) auch als gemischte Schüttung in nur einen einzigen Behälter angeordnet sein, der dann an die Stelle der separaten Kapseln tritt.

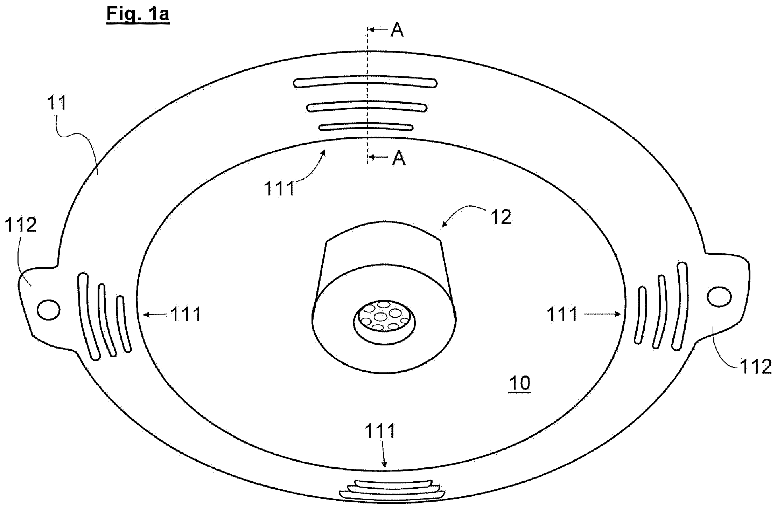

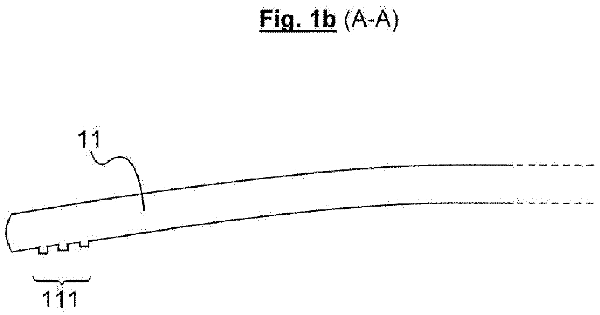

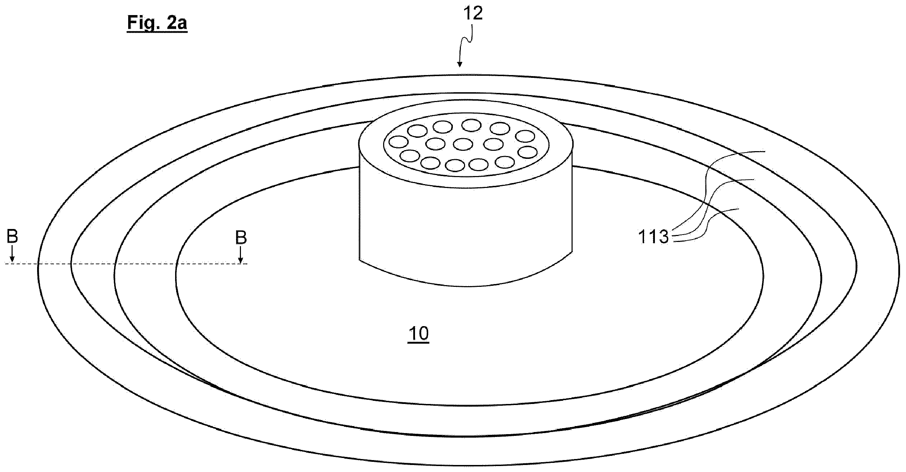

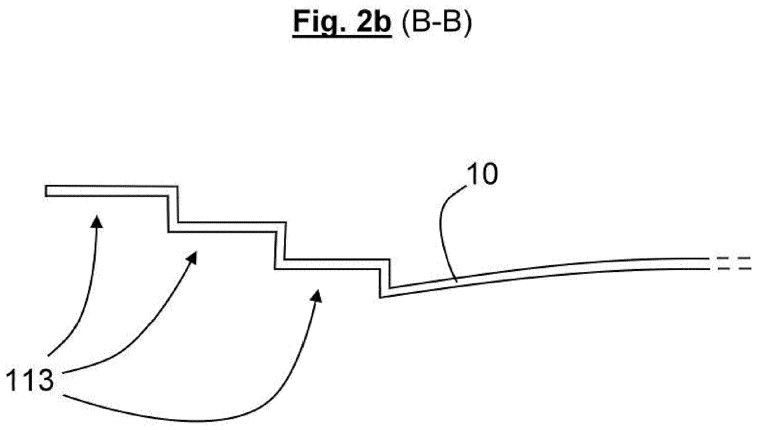

Der Deckel kann aus einem einheitlichen Metallkörper, z.B. aus Edelstahl oder im Wesentlichen aus Glas, ggf. jeweils mit einem Silikonrand in einer Ausgestaltung nach Fig. 1a oder Fig. 2a bestehen.

### Bezugszeichenliste

- 10: Innenteil
- 11: ringförmiges Außenteil
- 111: Rippentrippeln
- 112: Ausstülpungen
- 12: Gehäuse
- 121: Innenrohr
- 122: Außengewinde
- 123: Aufsatz
- 124: Innengewinde
- 13: Kapseln
- 14: Kapsel

## Patentansprüche

1. Deckel für Töpfe oder Pfannen mit einer Handhabe, insbesondere mehrstufig ausgebildeter Deckel für Töpfe oder Pfannen mit unterschiedlichem Durchmesser, mit einer integrierten Dampfauslassöffnung (101) mit einem Geruchsfilter (13), der aus Aktivkohle besteht oder diese enthält, **dadurch gekennzeichnet,**
**dass** in der Dampfauslassöffnung in einem Duftstoffspender (14) ein Duftstoff angeordnet ist und dass der Duftstoff, der ausströmende Gase mit Düften versetzt, und die Aktivkohle in einer Kunststoff-Gehäusekapsel in Form von Pulver, Granulat, Chips oder Perlen oder in einem Papier- oder Stoffgewebebeutel enthalten ist.

2. Deckel nach Anspruch 1, **dadurch gekennzeichnet, dass** die Aktivkohle in einem Vlies, in einem Schaum oder als Schüttung in einem Gehäuse, vorzugsweise einer austauschbaren Kapsel angeordnet ist.

3. Deckel nach Anspruch 1 oder 2, **dadurch gekennzeichnet, dass** der Duftstoff an einen Trägerstoff gebunden ist, vorzugsweise durch Ad- oder Absorption oder durch Tränkung eines porösen oder saugfähigen Trägers wie Filz.

4. Deckel nach einem der Ansprüche 1 bis 3, **dadurch gekennzeichnet, dass** an der Unterseite seiner Peripherie ringförmige Abstufunger (113) vorgesehen sind.

5. Deckel nach Anspruch 4, **dadurch gekennzeichnet, dass** die ringförmigen Abstufungen (113) in einem Silikonkörper angeordnet sind.

## Claims

1. Lid for pots or pans with a handle, in particular multistage formed lid for pots or pans with different diameters, with an integrated steam outlet (101) with an odour filter (13) consisting of activated carbon or containing this, **characterized in that**
a fragrance is arranged in the steam outlet in a fragrance dispenser (14) and that the fragrance which adds fragrance to outflowing gases, and the activated carbon are contained in a plastic-housing capsule in the form of power, granules, chips or beads or in a paper- or fabric bag.

2. Lid according to claim 1, **characterized in that** the activated carbon is arranged in a fleece, in a foam or as a bed in a housing, preferably an exchangeable capsule.

3. Lid according to claim 1 or 2, **characterized in that** the fragrance is bounded to a carrier, preferably by adsorption or absorption or by soaking a porous or an absorbent carrier such as felt.

4. Lid according to one of the claims 1 to 3, **characterized in that** annular gradations (113) are provided on the underside of its periphery.

5. Lid according to claim 4, **characterized in that** the annular gradations (113) are arranged in a silicon body.

## Revendications

1. Couvercle pour casseroles ou poêles présentant une poignée, en particulier couvercle réalisé à plusieurs étages pour casseroles ou poêles de diamètre différent, comprenant une ouverture de sortie de vapeur (101) intégrée avec un filtre anti-odeurs (13) qui est composé de charbon actif ou contient celui-ci, **caractérisé par le fait que**, dans ladite ouverture de sortie de vapeur, une substance odoriférante est agencée dans un distributeur de substance odoriférante (14) et que la substance odoriférante qui parfume les gaz sortants ainsi que le charbon actif sont contenus dans une capsule de logement en matière plastique sous forme de poudre, de granulés, de copeaux ou de perles ou dans un sac en papier ou en tissu.

2. Couvercle selon la revendication 1, **caractérisé par le fait que** le charbon actif est disposé dans un non-tissé, dans une mousse ou en tant que lit dans un boîtier, de préférence une capsule échangeable.

3. Couvercle selon la revendication 1 ou 2, **caractérisé par le fait que** la substance odoriférante est liée à une substance de support, de préférence par adsorption ou absorption ou par imprégnation d'un support poreux ou absorbant tel que le feutre.

4. Couvercle selon l'une quelconque des revendications 1 à 3, **caractérisé par le fait que**
des gradins annulaires sont prévus sur la face inférieure de sa périphérie.

5. Couvercle selon la revendication 4, **caractérisé par le fait que** les gradins annulaires (113) sont disposés dans un corps en silicone.
